# EUROPÄISCHE PATENTSCHRIFT

(11) **EP 3 132 875 B1**
(45) Veröffentlichungstag und Bekanntmachung des Hinweises auf die Patenterteilung: **27.12.2017**
(21) Anmeldenummer: 16176631.6
(22) Anmeldetag: 28.06.2016
(51) Int. Cl.: B23C 5/10

(54) **FRÄSWERKZEUG**
MILLING TOOL
OUTIL DE FRAISAGE

(30) Priorität: 17.08.2015 DE 102015113541
(43) Veröffentlichungstag der Anmeldung: 22.02.2017
(73) Patentinhaber: Wendling, Rudolf, 93333 Neustadt an der Donau (DE)
(72) Erfinder: Wendling, Rudolf, 93342 Saal/Donau (DE)
(74) Vertreter: Hannke, Christian

(56) Entgegenhaltungen:
- DE-A1-102013 002 730
- DE-B4-102007 034 087
- DE-C1- 3 742 942
- KR-A- 20130 039 109
- US-A- 6 164 876

## Beschreibung

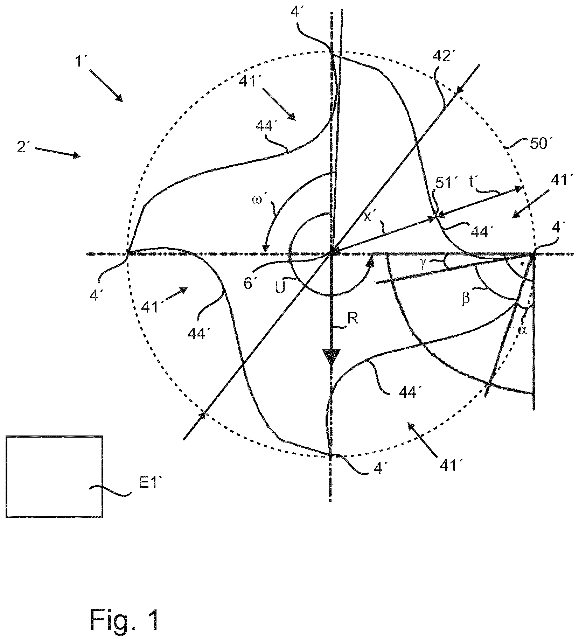

Die vorliegende Erfindung bezieht sich auf ein Fräswerkzeug bzw. Fräserwerkzeug zum spanenden Bearbeiten von Körpern. Ein Beispiel für ein solches Fräswerkzeug gemäß dem Oberbegriff des unabhängigen Patentanspruches 1 offenbart DE 10 2007 034087 B4. Derartige Fräserwerkzeuge werden überwiegend auf Roboterfräszellen und auf CNC-Fräsen zum Bearbeiten von beispielsweise Nichtmetallen, wie Kunststoffen, Holz, Glasfaser, Carbon und ähnlichem verwendet. Zur Veranschaulichung ist in der Fig. 1 ein Fräswerkzeug aus dem Stand der Technik dargestellt.

Beim spanenden Bearbeiten von Kunststoff-Werkstücken führt die im Gegensatz zu Metallen relativ geringe Wärmeleitfähigkeit dieser Werkstoffe dazu, dass die durch die Reibung zwischen Fräswerkzeug und Werkstück auftretende Wärme nicht so schnell abgeführt werden und der Kunststoff an der Bearbeitungsstelle schmelzen kann. Daher muss die Schnittgeschwindigkeit niedrig und der Vorschub bzw. die Spanquerschnitte groß gewählt werden. Beispielsweise werden bei einem für die Bearbeitung von Kunststoffkörpern eingesetzten Fräswerkzeug ein Vorschub von 3 m/min, eine Drehzahl von 25.000 rpm sowie ein Spanwinkel von 30° gewählt.

Des Weiteren werden bei der spanenden Bearbeitung von Metallen generell Schmierstoffe verwendet, wohingegen Kunststoffe trocken, also ohne Schmierstoffe, spanend bearbeitet werden.

Wenn beim Fräsen von thermoplastischen Kunststoffen Werkzeuge mit wenigen Schneiden verwendet werden, wird meist die Größe bzw. die Dicke des abgetragenen Spans erhöht. Das kann zur Folge haben, dass die Wärmeabfuhr nicht ausreichend hoch ist und das Werkstück schmilzt. Insbesondere können auch Ausrisse am Werkstück und/oder am Fräswerkzeug auftreten. Insofern ist bei Werkzeugen mit nur einer Schruppschneide das Vorsehen weiterer kleinerer Schneiden, insbesondere Schlichtschneiden, notwendig.

Wenn beim spanenden Bearbeiten des jeweiligen Körpers der Span nicht mit ausreichend hoher Geschwindigkeit aus der Frässtelle abgeführt werden kann, erfolgt im schlechtesten Fall ein Verstopfen bzw. Blockieren des Fräsers. Ebenfalls können unerwünschte Ausrisse an der Werkstückoberfläche entstehen.

Mit den oben genannten notwendigen Werten der Verfahrensparameter resultieren allerdings lange Bearbeitungszeiten für die einzelnen Werkstücke und damit eine niedrige Produktivität.

Der vorliegenden Erfindung liegt demnach die Aufgabe zugrunde, ein Fräserwerkzeug bereitzustellen, welches derart ausgebildet ist, dass selbst bei hohen Vorschubgeschwindigkeiten eine ausreichend schnelle Abfuhr des Spans und eine qualitativ hochwertige Oberfläche des Werkstücks sichergestellt wird.

Die Aufgabe der Erfindung wird gelöst durch ein Fräswerkzeug zum spanenden Bearbeiten von Werkstücken mit einem als Rotationskörper ausgebildeten Grundkörper, umfassend mindestens eine Schlichtschneide und mindestens eine Schruppschneide, welche jeweils sich zumindest teilweise spiralförmig um eine Rotationsachse des Grundkörpers in einem Werkzeugschneidenbereich des Grundkörpers erstreckend ausgebildet sind und welchen in Umfangsrichtung des Fräswerkzeugs jeweils eine Spannut vorgeordnet ist, wobei ein Durchmesser eines der Schruppschneide zugeordneten ersten Flugkreises größer ist als ein Durchmesser eines der Schlichtschneide zugeordneten zweiten Flugkreises, wobei der Schruppschneide in Umfangsrichtung ein Freiwinkel nachgeordnet ist und wobei die Schlichtschneide in Umfangsrichtung ohne nachgeordneten Freiwinkel ausgestaltet ist.

Das Fräswerkzeug funktioniert wie folgt: Die große Schruppschneide mit Freiwinkel schneidet einen Span vom Werkstück ab. Dann schneiden die kleinen Schlichtschneiden, welche ohne Freiwinkel ausgestaltet sind. Dabei drücken die kleinen Schlichtschneiden nicht, da sie auf einem oder auf mehreren Flugkreisen liegen, welche allesamt mit kleinerem Durchmesser ausgestattet sind als der Flugkreis der Schruppschneide, mithin unterhalb des Flugkreises bzw. Teilkreises der Schruppschneide(n) liegen. Daher ist kein Freiwinkel erforderlich.

Mit den Schlichtschneiden lässt sich also der Innendruck minimieren. Die kleine Schneide nimmt dabei den Druck von der großen Schneide weg, der an der Innenseite der Spannut, mithin an deren Mantelfläche, durch den Kontakt mit dem Werkstück aufgebaut wird. Der Außendruck, der am Freiwinkel der Schruppschneide herrscht, wird durch das Wirken der Schlichtschneiden erfahrungsgemäß wenig beeinflusst.

Erstaunlicherweise hat sich bei Praxistests gezeigt, dass die Anbringung eines den Schlichtschneiden nachfolgenden Freiwinkels keinen Vorteil, sondern im Gegenteil sogar einen Nachteil bringt, da der Kunststoff bei gleicher Drehzahl des Fräswerkzeugs zu schmelzen anfängt. Um dies zu verhindern, muss also die Drehzahl herabgesetzt werden. Dabei konnte beobachtet werden, dass die Drehzahl umso mehr herabgesetzt werden musste, je mehr Schneiden mit Freiwinkel insgesamt am Fräswerkzeug angeordnet waren, da hier der durch die Schlichtschneiden entstehende Außendruck umso höher war.

Andererseits hat sich in den Tests gezeigt, dass ein Werkzeug mit Schlichtschneiden eine qualitativ sehr viel hochwertigere Oberfläche hervorbringt als ein Werkzeug mit nur einer Schneide, bevorzugt mit nur einer Schruppschneide, da nur im ersten Fall der Innendruck wesentlich reduziert werden konnte. Der wesentliche Vorteil des erfindungsgemäßen Fräswerkzeugs ist also das Erzielen einer Oberfläche mit guten Eigenschaften bei gleichzeitig hoher Drehzahl und hohem Vorschub des Fräswerkzeugs.

Dabei arbeiten beide Schneiden miteinander zusammen bzw. helfen einander gegenseitig, wobei die große Schneide (Schruppschneide) vorarbeitet und große Spanvolumina von der Werkstückoberfläche abhebt. Die kleine Schneide (Schlichtschneide) bearbeitet die Werkzeugoberfläche nach, indem kleinere Späne abgenommen werden, womit eine glattere Oberfläche erzielt wird.

Das Ergebnis ist eine saubere bzw. qualitativ hochwertige Werkstückoberfläche ohne Ausrisse bzw. mit deutlich verminderter Zahl an Ausrissen.

Eigentlich wird bei der Bearbeitung von harten, kurzspanenden Werkstoffen ein kleiner Freiwinkel und bei der Bearbeitung von plastisch verformbaren Werkstoffen wie zum Beispiel von Kunststoffen ein großer Freiwinkel empfohlen.

Die positive Wirkung des fehlenden Freiwinkels der Schlichtschneide(n) lässt sich folgendermaßen herleiten: Bei großen Freiwinkeln kann durch das große Spanvolumen und durch einen evtl. Spanstau ein Wärmestau in der Schneidenspitze entstehen. Der Schneidkeil kann geschwächt werden und Ausbrüche entstehen. Kleine Freiwinkel hingegen führen zur Verstärkung des Schneidkeiles und sind dazu geeignet, die Oberflächenqualität zu verbessern, solange der Druck hinreichend abgeschwächt ist. Außerdem können sie schwingungsdämpfend wirken, wodurch ebenfalls eine Qualitätssteigerung zu erwarten ist. Da nun die Schruppschneide die Aufgabe des Spanabtragens zum großen Teil übernimmt, kann die Schlichtschneide die Aufgabe der Qualitätsverbesserung übernehmen.

Es hat sich gezeigt, dass die hochwertigen Ergebnisse gerade dann auftreten, wenn die Schruppschneide auf einem größeren Durchmesser liegt als die Schlichtschneide. Mit der Schlichtschneide wird das von der Schruppschneide erzeugte Oberflächenprofil abgetragen und eine saubere, vorspaltungs- und ausrissfreie Oberfläche erzielt.

Im Sinne der Erfindung wird der Ausdruck "Flugkreis" oder "Teilkreis" für den virtuellen Kreis verwendet, welcher im Querschnitt des Fräswerkzeugs betrachtet durch die Rotationsachse des Fräswerkzeugs als Mittelpunkt und durch den äußersten Punkt der jeweiligen Schneide als Begrenzung des Radius' definiert ist. Dabei ist der Querschnitt des Fräswerkzeugs senkrecht zur Mittelachse des Fräswerkzeugs zu betrachten.

Die vorliegende Erfindung beschreibt beispielsweise einen Schaftfräser, also ein Fräswerkzeug, bei welchem der Durchmesser im Verhältnis zur Werkzeuglänge oder zum Werkzeugschneidenbereich gering ist. Dabei stellt der Werkzeugschneidenbereich den Bereich in Längsrichtung des Fräswerkzeugs dar, welcher sich von einer Stirnfläche bis zum Werkzeugspannbereich erstreckt und in welchem Umfangsschneiden angeordnet sind. Der Werkzeugspannbereich wiederum ist ein axialer Bereich des Fräswerkzeugs, welcher zumindest teilweise dazu vorgesehen ist, in eine Werkzeugspannvorrichtung der Werkzeugmaschine eingespannt zu werden.

Die Schruppschneiden und die Schlichtschneiden sind mit anderen Worten als am Umfang des Werkzeugschneidenbereichs des Fräswerkzeugs angeordnete wendel- oder helixförmige Schneiden ausgestaltet.

Um den Druck auf die Schlichtschneiden zu reduzieren, ist es vorteilhaft, wenn mehrere Schlichtschneiden angeordnet sind. Dabei ist vorstellbar, dass die letztendliche Werkstückoberfläche während einer Umdrehung des Fräswerkzeugs Schritt für Schritt erzeugt wird. Es ist also vorteilhaft, wenn mindestens zwei Schlichtschneiden zwei zweite Flugkreise mit unterschiedlichen Durchmessern zugeordnet sind.

Aus der Praxis haben sich die folgenden Ausführungsbeispiele als besonders vorteilhaft erwiesen: Am Fräswerkzeug sind demnach entweder eine Schruppschneide und zwei Schlichtschneiden oder eine Schruppschneide und drei Schlichtschneiden oder zwei Schruppschneiden und zwei Schlichtschneiden angeordnet.

Da bei der Bearbeitung von Kunststoffen eine große Spannut von Vorteil ist, hat es sich in der Praxis als vorteilhaft herausgestellt, wenn ein radialer Abstand zwischen der Rotationsachse des Grundkörpers und einer Mantelfläche der Spannut der Schruppschneide einen Wert aus einem Bereich von 0,01 bis 0,2 mm, bevorzugt aus einem Bereich von 0,05 bis 0,15 mm, besonders bevorzugt von 0,1 mm aufweist. Anders ausgedrückt, weist ein vorteilhaftes Verhältnis des Flugkreisdurchmessers der Schruppschneide zum radialen Abstand zwischen der Rotationsachse des Grundkörpers und der Mantelfläche der Spannut der Schruppschneide beispielsweise einen Wert von 10-140, insbesondere von 20, 40, 60 oder 80 auf. Dies gilt zum Beispiel für ein Fräswerkzeug mit dem Flugkreisdurchmesser der Schruppschneide von 2, 4, 6, oder 8 mm und dem radialen Abstand mit einem Wert von 0,1 mm. Die genannten Werte für den radialen Abstand und für das Verhältnis des Flugkreisdurchmessers der Schruppschneide zum radialen Abstand gelten bevorzugt für Fräswerkzeuge mit nur einer Schruppschneide, also für Fräswerkzeuge, welche nur eine Schneide aufweisen, welche mit einem Freiwinkel versehen ist. Diese Fräswerkzeuge werden oft als "Einschneider" bezeichnet.

Sind hingegen zwei oder mehr Schruppschneiden am erfindungsgemäßen Fräswerkzeug vorgesehen, können die Werte davon abweichen.

Bei einem Fräswerkzeug mit zwei Schruppschneiden ("Zweischneider") und einem Durchmesser von 6 mm hat es sich in der Praxis beispielsweise bewährt, wenn der radiale Abstand einen Wert aus einem Bereich von 0,8 bis 1,6 mm, bevorzugt von 1,2 mm aufweist. Dementsprechend weist die Tiefe der Spannut (Nutentiefe), welche der Schruppschneide zugeordnet ist, einen Wert aus einem Bereich von 1,4 bis 2,2 mm, bevorzugt von 1,8 mm auf.

Es gilt selbstverständlich, dass die Hälfte des Durchmessers (Radius) des Fräswerkzeugs der Summe aus Nutentiefe und radialem Abstand entspricht.

Bei einem Fräswerkzeug mit zwei Schruppschneiden und einem Durchmesser von 8 mm hat es sich in der Praxis beispielsweise bewährt, wenn der radiale Abstand einen Wert aus einem Bereich von 1,2 bis 2,0 mm, bevorzugt von 1,6 mm aufweist. Dementsprechend weist die Tiefe der Spannut (Nutentiefe), welche der Schruppschneide zugeordnet ist, einen Wert aus einem Bereich von 2,0 bis 2,8 mm, bevorzugt von 2,4 mm auf.

Bei einem Fräswerkzeug mit drei Schruppschneiden und einem Durchmesser von 6 mm hat es sich in der Praxis beispielsweise bewährt, wenn die Nutentiefe einer einer ersten Schruppschneide zugeordneten ersten Spannut an der Stirnfläche einen Wert von 1,0 bis 1,4 mm, bevorzugt von 1,2 mm aufweist. Bis zum Ende der Nut ändert sich die Nutentiefe dabei bevorzugt mit einem Wert, welcher dem negativen Tangens von 0,5° entspricht.

Ferner hat es sich in der Praxis beispielsweise bewährt, wenn die Nutentiefe einer einer zweiten Schruppschneide zugeordneten zweiten Spannut an der Stirnfläche einen Wert von 2,0 bis 2,4 mm, bevorzugt von 2,2 mm aufweist. Bis zum Ende der Nut ändert sich die Nutentiefe dabei bevorzugt mit einem Wert, welcher dem negativen Tangens von 4,5° entspricht. Bevorzugt weist diese Spannut einen Wert aus einem Bereich von 3 bis 7 mm, besonders bevorzugt von 5 mm auf.

Es gilt dabei als Faustregel: Je höher die Anzahl an Schneiden, insbesondere an Schruppschneiden, ist, desto mehr Außendruck erfährt das jeweilige Fräswerkzeug und desto geringer sollte die Nutentiefe im Verlauf der Länge der Nut ab der Stirnfläche gewählt werden. Im vorderen Bereich wird die Nutentiefe dagegen wie beschrieben größer gewählt, um die Spanabfuhr zu optimieren.

In der Praxis hat es sich als besonders vorteilhaft herausgestellt, wenn die Nutentiefe generell zumindest abschnittsweise und/oder besonders bevorzugt zumindest im bevorzugten ersten oder zweiten Messbereich einen Wert aus einem Bereich von 20 bis 40 %, bevorzugt von 30% des Durchmessers des Fräswerkzeugs aufweist.

Dabei gilt, dass die Nutentiefe vorne an der Stirnfläche (bevorzugter erster Messbereich) oder in einem Abschnitt, welcher im Bereich von 0 bis 5 % der Gesamtlänge des Werkzeugschneidenbereichs ab der Stirnfläche gesehen liegt (bevorzugter zweiter Messbereich), gemessen wird. Gemäß einer vorteilhaften Ausführungsform ist die Nutentiefe wie auch oben anhand der Beispiele beschrieben von der Stirnfläche des Fräswerkzeugs in Richtung zum Werkzeugspannbereich hin sich verkleinernd ausgebildet, wodurch eine höhere Stabilität des Fräswerkzeugs erzielt wird. Das bedeutet wiederum, dass das Maß des radialen Abstandes von der Stirnfläche des Fräswerkzeugs in Richtung zum Werkzeugspannbereich hin sich vergrößernd ausgebildet ist.

Besonders bevorzugt ist dabei ein Wert einer Änderung der Nutentiefe von der Stirnfläche des Fräswerkzeugs in Richtung zum Werkzeugspannbereich hin zumindest abschnittsweise konstant. Weiter bevorzugt ist, dass mindestens zwei hinsichtlich des Werts für die Änderung der Nutentiefe von der Stirnfläche des Fräswerkzeugs in Richtung zum Werkzeugspannbereich unterschiedlich ausgestaltete Abschnitte der Nut vorgesehen sind.

Mathematisch ausgedrückt stellt die Nutentiefe die Größe y dar und die Erstreckung der Nut die Größe x (wobei x=0 an der Stirnfläche des Fräswerkzeugs und x=LN am Nutende). Die Änderung der Nutentiefe ist somit die Steigung der Funktion y(x), mithin dy/dx. In einem ersten Abschnitt von 0≤x≤x1 ist eine erste Steigung beispielsweise m1 und in einem zweiten Abschnitt von x1<x≤LN ist eine zweite Steigung beispielsweise m2, wobei die zweite Steigung m2 größer ist als m1.

Die erste Steigung m1 und/oder die zweite Steigung m2 sind bevorzugt mit einem konstanten Wert ausgestaltet, mithin nicht von x abhängig. Ein bevorzugter Wert für m1 entspricht dabei dem negativen Tangens von 2° bis 4°, bevorzugt von 3°, also beispielsweise etwa einem Wert aus einem Bereich von -0,0349 bis -0,0699, bevorzugt von -0,052. Ein bevorzugter Wert für m2 entspricht dabei etwa dem negativen Tangens von 8° bis 12°, bevorzugt von 10°, also beispielsweise etwa einem Wert aus einem Bereich von -0,141 bis -0,213, besonders bevorzugt von -0,176.

Aus dem Stand der Technik ist beispielsweise bisher bekannt, bei Fräswerkzeugen den Wert für x1 bei bevorzugt 90 bis 95 %, besonders bevorzugt bei 92,5 % der Gesamtnutlänge LN zu wählen. Dahingegen ist es beim erfindungsgemäßen Fräswerkzeug bevorzugt, den Wert für x1 bei bevorzugt 45 bis 55 %, besonders bevorzugt bei 50 %, also der Hälfte der Gesamtnutlänge LN zu wählen. Dies dient vor allem der Stabilisierung des erfindungsgemäßen Fräswerkzeugs.

Die vorherigen und folgenden Angaben, welche sich beispielsweise auf die Nutentiefe oder andere Parameter beziehen und nicht auf Fräswerkzeuge mit einer bestimmten Anzahl an Schruppschneiden und/oder Schlichtschneiden bezogen sind, können sich insbesondere auf Fräswerkzeuge mit einer Schruppschneide, zwei Schruppschneiden, drei Schruppschneiden oder mehr Schruppschneiden beziehen. Die Anzahl der Schlichtschneiden kann entsprechend variieren und liegt beispielsweise jeweils in einem Bereich von 1 bis 3 oder mehr.

Um sicherzugehen, dass die Spannut der Schruppschneide ausreichend groß dimensioniert werden kann, und um oben genannte Vorteile der Zusammenarbeit von Schruppschneide und Schlichtschneide möglichst optimal ausnutzen zu können, hat es sich in der Praxis bewährt, wenn die Spannut der Schruppschneide sich in Umfangsrichtung um ein 2- bis 8-faches ganzzahliges oder nicht ganzzahliges Vielfaches, bevorzugt um ein 2- bis 4-faches Vielfaches weiter erstreckt als die Spannut der Schlichtschneide.

Dieser Grad der Erstreckung in Umfangsrichtung lässt sich bevorzugt über die Bestimmung eines Öffnungswinkels der Nuten bestimmen. Dabei werden in einer Querschnittsansicht des Fräswerkzeugs die Verbindungslinien zwischen dem Mittelpunkt bzw. zwischen der Rotationsachse des Fräswerkzeugs zu den am weitesten außen liegenden Punkten der Nuten eingezeichnet und der Winkel zwischen den beiden resultierenden Verbindungslinien gemessen. Beispielsweise beträgt der Öffnungswinkel der Schruppschneide 120°, während der Öffnungswinkel der Spannut einer ersten Schlichtschneide 60°, der Öffnungswinkel der Spannut einer zweiten Schlichtschneide 30° und der Öffnungswinkel der Spannut einer zweiten Schlichtschneide 15° betragen.

Ebenfalls hat es sich in der Praxis bewährt, wenn der Durchmesser des mindestens einen ersten Flugkreises einen Wert aus einem Bereich von 2 bis 14 mm, bevorzugt von 2 bis 8 mm, besonders bevorzugt von 2, 4, 6 oder 8 mm und/oder der Durchmesser des mindestens einen zweiten Flugkreises einen Wert aus einem Bereich von 1 bis 12 mm, bevorzugt von 1 bis 7 mm, besonders bevorzugt von 1, 3, 5 oder 7 mm aufweist. Beispielsweise weist der erste Flugkreisdurchmesser einen Wert von 6 mm auf und der Flugkreisdurchmesser der einzigen Schlichtschneide einen Wert von 5 mm auf. Wenn mehrere Schlichtschneiden vorhanden sind, können diese auf einem gemeinsamen Flugkreis liegen oder auf zwei oder mehreren unterschiedlichen Flugkreisen mit unterschiedlichen Durchmessern. Denkbar ist auch, dass drei Schlichtschneiden angeordnet sind, wovon eine auf einem anderen Flugkreis mit unterschiedlichem Durchmesser liegt als die beiden anderen, welche wiederum auf einem gemeinsamen oder unterschiedlichen Flugkreis liegen.

In der Kunststoffbearbeitung hat es sich zudem als vorteilhaft erwiesen, wenn der mindestens eine Freiwinkel einen Wert aus einem Bereich von 2-30°, bevorzugt von 5-15° aufweist.

Um das Eintauchen in eine Werkstückoberfläche zu erleichtern, hat es sich als vorteilhaft herausgestellt, wenn das Fräswerkzeug im Werkzeugschneidenbereich eine Stirnfläche aufweist, die zumindest abschnittsweise gegenüber einer sich rechtwinklig zur Rotationsachse erstreckenden Ebene geneigt ausgebildet ist.

Dabei ist es denkbar, dass einzelne Anteile der geneigten Stirnfläche eben oder kurvenförmig ausgebildet sind und sich in Richtung oder entgegen einer Längsrichtung des Grundkörpers oder in Richtung einer Radialrichtung des Grundkörpers erstrecken.

Ferner ist es denkbar, dass das Fräswerkzeug links- oder rechtsschneidend und/oder links- oder rechtsspiralig ausgebildet ist. Unter einem "rechtsschneidenden" Fräswerkzeug wird erfindungsgemäß verstanden, dass eine oder mehrere der Schneiden nur bei einer Rechtsrotation des mit dem Werkstück in Eingriff stehenden Fräswerkzeugs ihre beabsichtigte Schneidwirkung entfalten. Analog wird unter einem "linksschneidenden" Fräswerkzeug erfindungsgemäß verstanden, dass eine oder mehrere der Schneiden nur bei einer Linksrotation des mit dem Werkstück in Eingriff stehenden Fräswerkzeugs ihre beabsichtigte Schneidwirkung entfalten. Mit dem Begriff "rechtsspiralig" wird erfindungsgemäß beschrieben, dass eine oder mehrere Schneiden sich ausgehend vom Werkzeugspannbereich in axialer Richtung gesehen nach rechts spiralisieren. Analog wird mit dem Begriff "linksspiralig" erfindungsgemäß beschrieben, dass eine oder mehrere Schneiden sich ausgehend vom Werkzeugspannbereich in axialer Richtung gesehen nach links spiralisieren.

Eine weitere Ausführungsform sieht vor, dass das Fräswerkzeug nicht zylindrisch, sondern konisch ausgebildet ist und dabei von Spitze zu Schaft, mithin vom Werkzeugschneidenbereich bis zum Werkzeugspannbereich, sich verbreiternd ausgebildet ist.

Und schließlich ist es vorteilhaft, wenn das Fräswerkzeug zumindest anteilig aus mindestens einem der Werkstoffe ausgewählt aus der Gruppe zumindest bestehend aus Schnellarbeitsstahl (HSS), Hartmetall, Cermet und/oder ähnlichem besteht.

Das erfindungsgemäße Fräswerkzeug kann weiterhin das Merkmal aufweisen, wonach das Verhältnis aus dem Öffnungswinkel der Spannut mindestens einer der Schruppschneiden zur Tiefe der ersten Spannut mindestens einer der Schruppschneiden größer ist als das Verhältnis aus dem Öffnungswinkel der Spannut mindestens einer der Schlichtschneiden zur Tiefe der Spannut mindestens einer der Schlichtschneiden.

Die Fräsqualität kann weiter verbessert werden, wenn die Schruppschneiden und/oder die Schlichtschneiden in Umfangsrichtung in unterschiedlichen Abständen voneinander angeordnet sind (Ungleichteilung). Gleichzeitig oder alternativ können sie mit unterschiedlichen Spiralsteigungswinkeln in Richtung einer Längsachse des Grundkörpers ausgeführt werden, um harmonische Schwingungsanregungen zu vermeiden. Gemäß einer weiteren bevorzugten Ausführungsform lässt sich die Wuchtgüte erhöhen, indem die Tiefen der Spanräume der genannten Schruppschneiden und/oder Schlichtschneiden zumindest in einem geringen Maße unterschiedlich zueinander ausgestaltet ist.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1: in einer Querschnittsansicht ein Fräswerkzeug aus dem Stand der Technik;
- Fig. 2a-c: Darstellungen einer ersten Ausführungsform des erfindungsgemäßen Fräswerkzeugs;
- Fig. 3a-c: Darstellungen einer zweiten Ausführungsform des erfindungsgemäßen Fräswerkzeugs;
- Fig. 4a-c: Darstellungen einer dritten Ausführungsform des erfindungsgemäßen Fräswerkzeugs;
- Fig. 5: seitliche Ansicht eines erfindungsgemäßen Fräswerkzeugs.

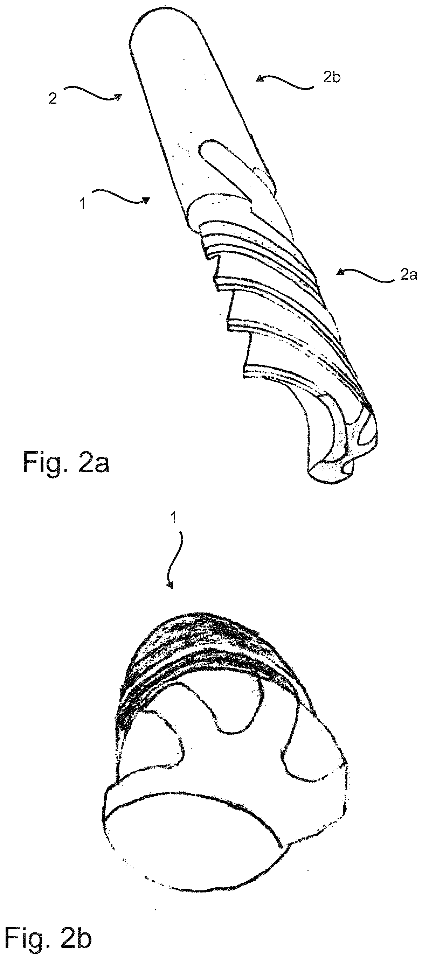

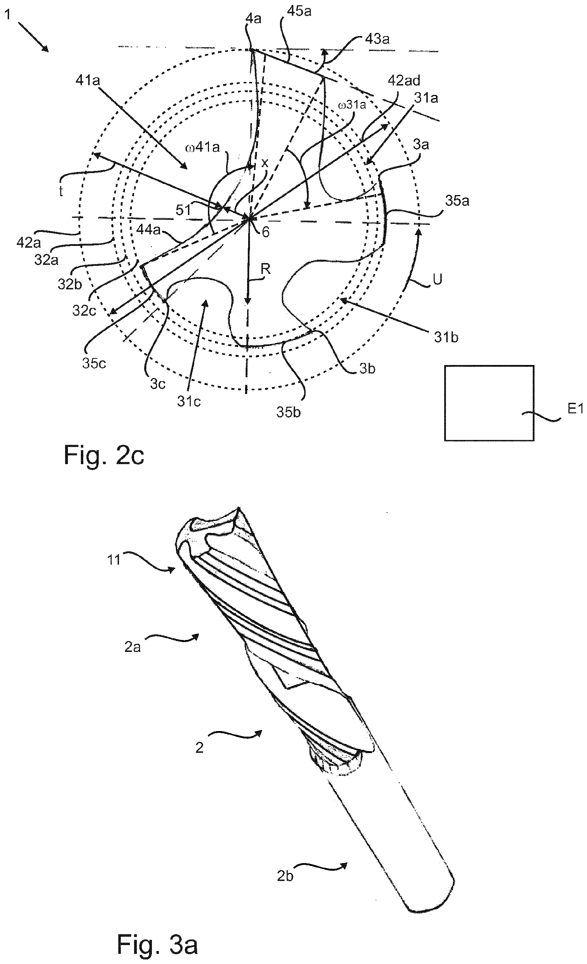

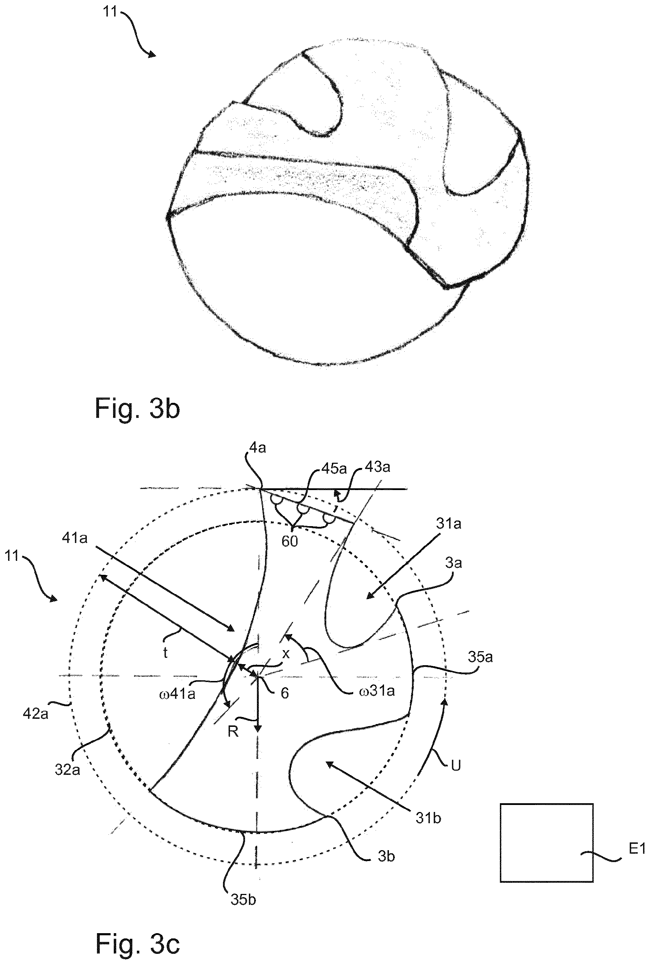

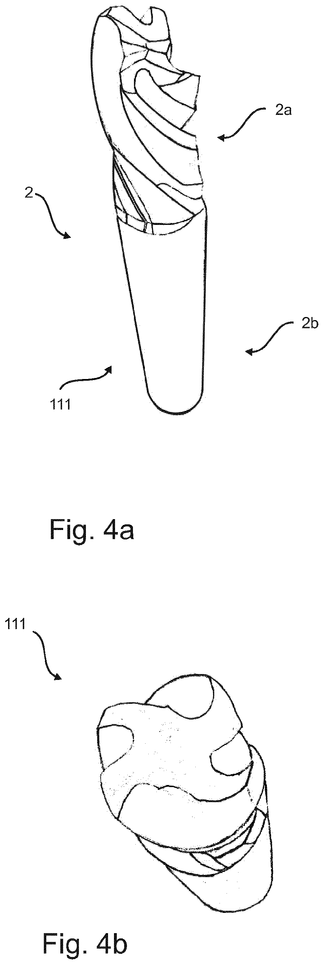

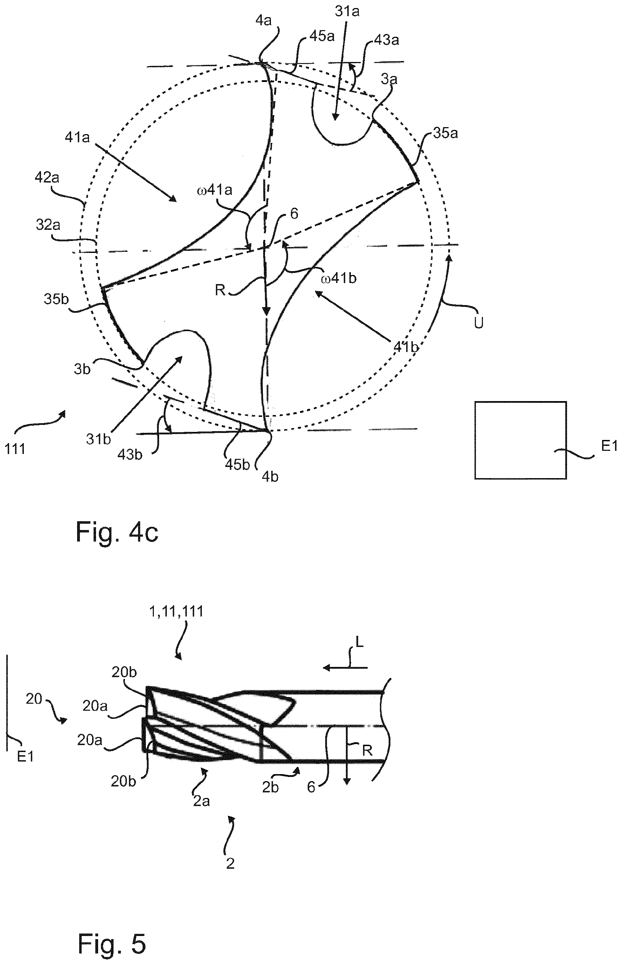

In den Figuren gilt dabei für einzelne Elemente, welche in den gezeigten Ausführungsbeispielen 1, 11, 111 eine identische Bezeichnung und/oder Funktion aufweisen, dass sie in mehreren oder allen gezeigten Ausführungsbeispielen 1, 11, 111 mit gleichen Bezugszeichen versehen sein können. So ist beispielsweise gemäß Fig. 2c, gemäß Fig. 3c und gemäß Fig. 4c, welche jeweils unterschiedliche Ausführungsbeispiele 1; 11; 111 zeigen, eine Schruppschneide jeweils mit dem Bezugszeichen "4a" gekennzeichnet, wobei diese Schruppschneide 4a in den jeweiligen Ausführungsbeispielen 1; 11; 111 unterschiedlich ausgestaltet und/oder angeordnet sein kann.

In Fig. 1 ist der Querschnitt eines herkömmlichen Fräswerkzeugs 1' aus dem Stand der Technik in einer Ebene E1' senkrecht zu dessen Rotationsachse 6' abgebildet, welches vorliegend vier gleichberechtigte und insbesondere gleich ausgestaltete Schneiden 4' umfasst. Die in Radialrichtung R des Fräswerkzeugs 1' am weitesten außen liegenden Punkte bzw. Spitzen der Schneiden 4' liegen alle auf einem gemeinsamen virtuellen Kreis, welcher Flugkreis 50' oder auch Teilkreis genannt wird und den Flugkreisdurchmesser 42' aufweist. Die Umfangsrichtung U des Fräswerkzeugs ist vorliegend gleichzusetzen mit der Rotationsrichtung des Fräswerkzeugs 1' bei der Bearbeitung des Werkstücks und entspricht in diesem Beispiel einer Richtung gegen den Uhrzeigersinn.

Der Begriff "vorgeordnet" beschreibt im Sinne der Erfindung die Position eines Elements, welches im Querschnitt des Fräswerkzeugs betrachtet in Umfangsrichtung vor einem anderen Element angeordnet ist. Dementsprechend beschreibt der Begriff "nachgeordnet" im Sinne der Erfindung die Position eines Elements, welches im Querschnitt des Fräswerkzeugs betrachtet in Umfangsrichtung nach einem anderen Element angeordnet ist. Mit anderen Worten dreht das vorgeordnete Element eher an der Werkstückoberfläche vorbei als das nachgeordnete Element.

Dabei ist unter dem Begriff "vorgeordnet" erfindungsgemäß bzw. für die gezeigten Ausführungsbeispiele insbesondere "unmittelbar vorgeordnet" zu verstehen. Ebenfalls ist unter dem Begriff "nachgeordnet" erfindungsgemäß bzw. für die gezeigten Ausführungsbeispiele insbesondere "unmittelbar nachgeordnet" zu verstehen.

So ist in Umfangsrichtung U jeweils ein Freiwinkel α den Schneiden 4' nachgeordnet. Dieser Winkel α beschreibt bei der spanabhebenden Bearbeitung den Winkel des Freiraumes zwischen Werkzeug 1' und bearbeiteter Fläche. Er verringert die Reibung zwischen beiden Teilen. Der Freiwinkel α wird durch die Schneidenebene und Freifläche gebildet und senkrecht zur Hauptschneide gemessen.

Ebenfalls ist ein Keilwinkel β an der Schneide 4' markiert, welcher den Winkel der Schneide darstellt. Dieser Keilwinkel β ist in der Praxis ein Kompromiss aus notwendiger Schnittschärfe und erforderlicher Stabilität der Schneide.

Freiwinkel α und Keilwinkel β bilden zusammen den Schnittwinkel, also der Winkel zwischen spanabführender Schneidefläche und Werkstückoberfläche.

Schließlich ist noch der Spanwinkel γ eingezeichnet, welcher durch die zur Spannut 41' gewandte Schneidenfläche und einer zur Werkstückoberfläche senkrechten Ebene definiert wird. Der Wert des Spanwinkels γ beeinflusst den Grad des Stauchens und Abfließens des Spans sowie die Wärmeverteilung bei der Zerspanung. Positive Spanwinkel führen zu guter Wärmeabfuhr und zu geringer Haftung des Spans am Schneidkeil. Nachteilig ist jedoch, dass ein relativ langer Span erzeugt wird, welcher durch erneutes Umlenken durch Spanleitstufen gebrochen werden kann. Um die Stabilität der Schneide bei der Zerspanung harter Werkstoffe zu erhöhen, wird ein kleiner oder sogar negativer Spanwinkel gewählt.

Freiwinkel α, Keilwinkel β und Spanwinkel γ ergeben in der Summe immer 90°.

In Umfangsrichtung ist den Schneiden 4' jeweils eine Spannut 41' mit Mantelfläche 44' und Öffnungswinkel ω' vorgeordnet. Der Abstand x' beschreibt die kürzeste Verbindung zwischen Mantelfläche 44' und Rotationsachse 6', mithin den Abstand x' zwischen einem in Radialrichtung R am weitesten in Richtung der Rotationsachse 6 liegenden Punkt 51' der Mantelfläche 44' und der Rotationsachse. Dahingegen beschreibt die Tiefe t' der Spannut 41' den Abstand zwischen ebendiesem Punkt 51' und dem Flugkreis 50'.

Die Begrifflichkeiten und Definitionen, welche für das Fräswerkzeug 1' aus dem Stand der Technik verwendet wurden, gelten analog auch für die nachfolgenden erfindungsgemäßen Fräswerkzeuge 1, 11, 111.

Für alle Ausführungsbeispiele 1; 11; 111 gilt, dass neben zwei perspektivischen Ansichten (siehe Fig. 2a; Fig. 3a; Fig. 4a und Fig. 2b; Fig. 3b; Fig. 4b) jeweils eine Querschnittsansicht des erfindungsgemäßen Fräswerkzeugs 1; 11; 111 abgebildet ist (siehe Fig. 2c; Fig. 3c; Fig. 4c). Aus Gründen der Übersichtlichkeit sind in den Querschnittsansichten dabei jeweils nur die geschnittenen Flächen veranschaulicht.

Ebenfalls gilt für alle Ausführungsbeispiele des erfindungsgemäßen Fräswerkzeugs 1, 11, 111, dass sie einen als Rotationskörper ausgebildeten Grundkörper 2 umfassen, welcher mindestens eine Schlichtschneide 3a, 3b, 3c und mindestens eine Schruppschneide 4a, 4b aufweist, welche jeweils sich zumindest teilweise spiralförmig um eine Rotationsachse 6 des Grundkörpers 2 in einem Werkzeugschneidenbereich 2a des Grundkörpers 2 erstreckend ausgebildet sind. Jeder Schruppschneide 3a, 3b, 3c und jeder Schlichtschneide 4a, 4b ist dabei in einer Umfangsrichtung U des Fräswerkzeugs 1, 11, 111 jeweils eine Spannut 31a, 31b, 31c bzw. 41a, 41b vorgeordnet im Sinne von unmittelbar vorgeordnet.

Ferner gilt für alle Ausführungsbeispiele des erfindungsgemäßen Fräswerkzeugs 1, 11, 111, dass ein Durchmesser 42ad, 42bd eines der Schruppschneide 4a, 4b zugeordneten ersten Flugkreises 42a, 42b größer ist als ein Durchmesser 32ad, 32bd, 32cd eines der Schlichtschneide 3a, 3b, 3c zugeordneten zweiten Flugkreises 32a, 32b, 32c, wobei der Schruppschneide 4a, 4b in Umfangsrichtung U ein Freiwinkel 43a, 43b nachgeordnet ist (im Sinne von unmittelbar nachgeordnet) und wobei die Schlichtschneide 3a, 3b, 3c in Umfangsrichtung U ohne nachgeordneten und insbesondere ohne unmittelbar nachgeordneten Freiwinkel ausgestaltet ist.

Der Schruppschneide 4a, 4b ist also jeweils ein Freiwinkel 43a, 43b zugeordnet, der Schlichtschneide 3a, 3b, 3c hingegen nicht. Das Fehlen des der Schlichtschneide 3a, 3b, 3c zugeordneten Freiwinkels lässt sich auch so beschreiben, dass der mindestens einen Schlichtschneide 3a, 3b, 3c in Umfangsrichtung U jeweils ein kreisbogenförmiger Abschnitt 35a, 35b, 35c unmittelbar nachgeordnet ist. Der Schruppschneide 4a, 4b hingegen ist in Umfangsrichtung jeweils ein gerade ausgestalteter Abschnitt 45a, 45b unmittelbar nachgeordnet.

Der Grundkörper 2 der erfindungsgemäßen Fräswerkzeuge 1, 11, 111 ist jeweils in einen Werkzeugschneidenbereich 2a und einen Werkzeugspannbereich 2b unterteilt (siehe Fig. 2a, 3a, 4a).

Bei den erfindungsgemäßen Fräswerkzeugen 1, 11, 111 ist die gezeigte Rotationsachse 6 jeweils außerhalb einer Spannut 31a, 31b, 31c, 41a, 41b und auch außerhalb einer sonstigen Ausnehmung des Fräswerkzeugs 1, 11, 111 angeordnet. Die Rotationsachse 6 ist also Teil des Werkstoffs des Fräswerkzeugs 1, 11, 111 bzw. innerhalb eines Vollkörpers des Grundkörpers 2 verlaufend angeordnet. Zur Veranschaulichung ist bei den Querschnitten der erfindungsgemäßen Fräswerkzeuge 1, 11, 111 jeweils die zur Rotationsachse 6 senkrecht angeordnete Ebene E1 eingezeichnet.

Die Fig. 2a-c zeigen eine erste Ausführungsform des erfindungsgemäßen Fräswerkzeugs 1, gemäß der eine Schruppschneide 4a mit Freiwinkel 43a und drei Schlichtschneiden 3a, 3b, 3c angeordnet sind. Der Freiwinkel 43a hat in diesem Beispiel einen Wert von 20°.

Der Schruppschneide 4a ist ein erster Flugkreis 42a mit Durchmesser 42ad und jeder der drei Schlichtschneiden 3a, 3b, 3c jeweils ein Flugkreis 32a, 32b, 32c mit Durchmesser 32ad, 32bd, 32cd zugeordnet. Alle vier Durchmesser 42ad, 32ad, 32bd, 32cd sind vom Wert her unterschiedlich und in der genannten Reihenfolge absteigend ausgestaltet. Zur Veranschaulichung gilt für dieses Beispiel, dass der erste Flugkreisdurchmesser 42ad einen Wert von 6 mm und die zweiten Flugkreisdurchmesser 32ad, 32bd, 32cd Werte von 5 mm, 4,5 mm und 4 mm aufweisen.

Ein radialer Abstand x zwischen der Rotationsachse 6 des Grundkörpers 2 und einem Punkt 51 einer Mantelfläche 44a der Spannut 41a der Schruppschneide 4a weist vorliegend einen Wert von 01 mm auf. Der Punkt 51 ist dabei der tiefste Punkt der Mantelfläche 44a, also der mit dem geringsten Abstand zur Rotationsachse 6. Eine Tiefe t der Spannut 41a ist dabei als Abstand zwischen Punkt 51 und Flugkreis 42a zu verstehen.

Am Vergleich des Öffnungswinkel ω41a der Spannut 41a der Schruppschneide 4a mit dem Öffnungswinkel ω31a einer 31a der Spannuten 31a, 31b, 31c der Schlichtschneiden 3a, 3b, 3c wird deutlich, dass sich vorliegend die Spannut 41a in Umfangsrichtung U etwa um ein 2,3-faches Vielfaches weiter erstreckt als die Spannut 31.

In Umfangsrichtung U des Fräswerkzeugs 1 sind also folgende Elemente unmittelbar einander nachfolgend angeordnet: Schruppschneide 4a, durch Vorsehen des Freiwinkels 43a ausgestalteter gerade verlaufender Abschnitt 45a, Spannut 31a, Schlichtschneide 3a, kreisbogenförmiger Abschnitt 35a, Spannut 31b, Schlichtschneide 3b, kreisbogenförmiger Abschnitt 35b, Spannut 31c, Schlichtschneide 3c, kreisbogenförmiger Abschnitt 35c und Spannut 41a, der dann die anfangs erwähnte Schruppschneide 4a unmittelbar nachfolgend angeordnet ist.

Die Fig. 3a-c zeigen eine zweite Ausführungsform des erfindungsgemäßen Fräswerkzeugs 11, gemäß der eine Schruppschneide 4a mit Freiwinkel 43a und zwei Schlichtschneiden 3a, 3b angeordnet sind. Der Freiwinkel 43a hat in diesem zweiten Beispiel ebenfalls einen Wert von 20°.

Der Schruppschneide 4a ist ein erster Flugkreis 42a mit Durchmesser 42ad und jeder der beiden Schlichtschneiden 3a, 3b ein gemeinsamer Flugkreis 32a mit Durchmesser 32ad zugeordnet. Die Werte der beiden Durchmesser 42ad, 32ad sind in der genannten Reihenfolge absteigend ausgestaltet. Zur Veranschaulichung gilt für das zweite Ausführungsbeispiel, dass der erste Flugkreisdurchmesser 42ad einen Wert von 8 mm und der zweite Flugkreisdurchmesser 32ad einen Wert von 7 mm aufweisen.

Zu den Angaben bezüglich des radialen Abstands x bzw. der Öffnungswinkel ω41a, ω31a wird auf die Beschreibung zur Figur 2c verwiesen. Die Mantelflächen der Spannuten 41a, 31a, 31b, 31c sind der besseren Übersicht wegen vorliegend nicht markiert.

Nach dem Freiwinkel 43a sind in diesem Beispiel mehrere Rippen bzw. Facetten 60 im Bereich 45a angebracht. Dies dient dazu, dass der Außenumfang des Fräswerkzeugs 11 abgesetzt bzw. vermindert ist, damit dieser Bereich 45a außer durch die Schneide 4a keinen Druck auf das Werkstück ausüben kann. Der Bereich 45a muss einen kleineren Durchmesser aufweisen als der Flugkreisdurchmesser 42ad. Durch die Anbringung der Facetten 60 entsteht allerdings kein eigener Freiwinkel.

Ein erfindungsgemäßes Fräswerkzeug 11 wird also beispielweise folgendermaßen gefertigt: Zunächst wird die mindestens eine erste Spannut 41a, 41b im als Rotationskörper ausgebildeten Grundkörper 2 spiralförmig ausgebildet, und zwar mittels eines ersten Werkzeugs zur spanenden Bearbeitung. Die mindestens eine Schruppschneide 4a, 4b wird im Bereich eines Übergangs zwischen der Spannut 41a, 41b und einer Umfangsfläche des Grundkörpers 2 ebenfalls mittels des ersten Werkzeugs ausgebildet. Dann werden die Rippen bzw. Facetten 60 in Form eines Facettenschliffs mittels eines zweiten Werkzeugs ausgebildet. Auf die gleiche Weise wie die Spannuten 41a, 41b und die Schruppschneiden 4a, 4b werden dann die Spannuten 31a, 31b, 31c und die Schlichtschneiden 3a, 3b, 3c angebracht, wobei hier das erste oder ein drittes Werkzeug verwendet werden kann. Die beiden anderen Fräswerkzeuge 1, 111 können selbstverständlich analog zum für das Fräswerkzeug 11 beschriebenen Verfahren gefertigt werden.

In Umfangsrichtung U des Fräswerkzeugs 11 sind also folgende Elemente unmittelbar einander nachfolgend angeordnet: Schruppschneide 4a, durch Vorsehen des Freiwinkels 43a ausgestalteter gerade verlaufender Abschnitt 45a, Spannut 31a, Schlichtschneide 3a, kreisbogenförmiger Abschnitt 35a, Spannut 31b, Schlichtschneide 3b, kreisbogenförmiger Abschnitt 35b und Spannut 41a, der dann die anfangs erwähnte Schruppschneide 4a unmittelbar nachfolgend angeordnet ist.

Die Fig. 4a-c zeigen eine dritte Ausführungsform des erfindungsgemäßen Fräswerkzeugs 111, gemäß der zwei Schruppschneiden 4a, 4b mit Freiwinkeln 43a, 43b und zwei Schlichtschneiden 3a, 3b angeordnet sind. Der Freiwinkel 43a hat in diesem dritten Beispiel einen Wert von 20° und der Freiwinkel 43b einen Wert von 18°. Beide Schruppschneiden 4a, 4b haben zueinander einen Abstand in Umfangsrichtung von 180°. Der Öffnungswinkel ω41a der Spannut 41a hat in diesem dritten Beispiel einen Wert von 110° und der Öffnungswinkel ω41b der Spannut 41b einen Wert von 115°.

Den Schruppschneiden 4a, 4b ist ein erster Flugkreis 42a mit Durchmesser 42ad und den Schlichtschneiden 3a, 3b ein zweiter Flugkreis 32a mit Durchmesser 32ad zugeordnet. Die Durchmesser 42ad, 32ad sind vom Wert her in der genannten Reihenfolge absteigend ausgestaltet. Zur Veranschaulichung gilt für das dritte Ausführungsbeispiel, dass der erste Flugkreisdurchmesser 42ad einen Wert von 6 mm und der zweite Flugkreisdurchmesser 32ad einen Wert von 5 mm aufweisen.

Der radiale Abstand x sowie die Mantelflächen der Spannuten 41a, 31a, 31b, 31c sind der besseren Übersicht wegen vorliegend nicht markiert.

In Umfangsrichtung U des Fräswerkzeugs 111 sind also folgende Elemente unmittelbar einander nachfolgend angeordnet: Schruppschneide 4a, durch Vorsehen des Freiwinkels 43a ausgestalteter gerade verlaufender Abschnitt 45a, Spannut 31a, Schlichtschneide 3a, kreisbogenförmiger Abschnitt 35a, Spannut 41b, Schruppschneide 4b, durch Vorsehen des Freiwinkels 43b ausgestalteter gerade verlaufender Abschnitt 45b, Spannut 31b, Schlichtschneide 3b, kreisbogenförmiger Abschnitt 35b und Spannut 41a, der dann die anfangs erwähnte Schruppschneide 4a unmittelbar nachfolgend angeordnet ist.

Fig. 5 zeigt eine seitliche Ansicht eines erfindungsgemäßen Fräswerkzeugs 1, 11, 111, wobei Details hinsichtlich der Ausgestaltung der Schrupp- und Schlichtschneiden nicht berücksichtigt wurden. Das Augenmerk sei auf die Stirnfläche 20 des Fräswerkzeugs 1, 11, 111 gelenkt, welche im Werkzeugschneidenbereich 2a des Grundkörpers 2 angeordnet ist und welche zumindest abschnittsweise gegenüber der sich rechtwinklig zur Rotationsachse 6 erstreckenden Ebene E1 geneigt ausgebildet ist. Einzelne Anteile 20a der geneigten Stirnfläche 20 sind eben und andere Anteile 20b kurvenförmig ausgebildet. Die kurvenförmigen Anteile 20b erstrecken sich vorliegend abschnittsweise entgegen der Längsrichtung L des Grundkörpers 2 und abschnittsweise in Radialrichtung R des Grundkörpers 2.

### Bezugszeichenliste

- 1', 1, 11, 111: Fräswerkzeug
- 2, 2': Grundkörper
- 2a: Werkzeugschneidenbereich
- 2b: Werkzeugspannbereich
- 3a-c: Schlichtschneide
- 4', 4a, 4b: Schruppschneide
- 6, 6': Rotationsachse
- 20: Stirnfläche
- 20a, 20b: Anteile
- 31a-c; 41', 41a, 41b: Spannut
- 35a-c, 45a, 45b: Abschnitt
- 32ad, 32bd, 42', 42ad, 42bd: Flugkreisdurchmesser
- 44', 44a, 44b: Mantelfläche
- 32a, 32b, 42', 42a, 42b, 50': Flugkreis
- 51', 51: Punkt
- E1, E1': Ebene
- L: Längsrichtung
- R: Radialrichtung
- U: Umfangsrichtung
- t, t': Tiefe
- x, x': Abstand
- α, 43a, 43b: Freiwinkel
- β: Keilwinkel
- γ: Spanwinkel
- ω', ω31a, ω41a, ω41b: Öffnungswinkel

## Patentansprüche

1. Fräswerkzeug (1, 11, 111) zum spanenden Bearbeiten von Werkstücken mit einem als Rotationskörper ausgebildeten Grundkörper (2), umfassend mindestens eine Schlichtschneide (3a, 3b, 3c) und mindestens eine Schruppschneide (4a, 4b), welche jeweils sich zumindest teilweise spiralförmig um eine Rotationsachse (6) des Grundkörpers (2) in einem Werkzeugschneidenbereich (2a) des Grundkörpers (2) erstreckend ausgebildet sind und welchen in Umfangsrichtung (U) des Fräswerkzeugs (1, 11, 111) jeweils eine Spannut (31a, 31b, 31c; 41a, 41b) vorgeordnet ist, wobei ein Durchmesser (42ad, 42bd) eines der Schruppschneide (4a, 4b) zugeordneten ersten Flugkreises (42a, 42b) größer ist als ein Durchmesser (32ad, 32bd, 32cd) eines der Schlichtschneide (3a, 3b, 3c) zugeordneten zweiten Flugkreises (32a, 32b, 32c), wobei der Schruppschneide (4a, 4b) in Umfangsrichtung (U) ein Freiwinkel (43a, 43b) nachgeordnet ist, **dadurch gekennzeichnet, dass** die Schlichtschneide (3a, 3b, 3c) in Umfangsrichtung (U) ohne nachgeordneten Freiwinkel ausgestaltet ist.

2. Fräswerkzeug (1, 11, 111) nach Anspruch 1,
**dadurch gekennzeichnet, dass**
mindestens zwei Schlichtschneiden (3a, 3b, 3c) zwei zweite Flugkreise (32a, 32b) mit unterschiedlichen Durchmessern (32ad, 32bd, 32cd) zugeordnet sind.

3. Fräswerkzeug (1, 11, 111) nach einem der vorhergehenden Ansprüche,
**dadurch gekennzeichnet, dass**
eine Schruppschneide (4a) und zwei Schlichtschneiden (3a, 3b) oder eine Schruppschneide (4a) und drei Schlichtschneiden (3a, 3b, 3c) oder zwei Schruppschneiden (4a, 4b) und zwei Schlichtschneiden (3a, 3b) angeordnet sind.

4. Fräswerkzeug (1, 11, 111) nach einem der vorhergehenden Ansprüche,
**dadurch gekennzeichnet, dass**
ein radialer Abstand (x) zwischen der Rotationsachse (6) des Grundkörpers (2) und einer Mantelfläche (44a, 44b) der Spannut (41a, 41b) der Schruppschneide (4a, 4b) einen Wert aus einem Bereich von 0,01 bis 0,2 mm, bevorzugt aus einem Bereich von 0,05 bis 0,15 mm, bevorzugt von 0,1 mm aufweist.

5. Fräswerkzeug (1, 11, 111) nach einem der vorhergehenden Ansprüche,
**dadurch gekennzeichnet, dass**
die Spannut (41a, 41b) der Schruppschneide (4a, 4b) sich in Umfangsrichtung (U) um ein 2- bis 8-faches ganzzahliges oder nicht ganzzahliges Vielfaches, bevorzugt um ein 2- bis 4-faches Vielfaches weiter erstreckt als die Spannut (31a, 31b, 31c) der Schlichtschneide (3a, 3b, 3c).

6. Fräswerkzeug (1, 11, 111) nach einem der vorhergehenden Ansprüche,
**dadurch gekennzeichnet, dass**
der Durchmesser (42ad, 42bd) des mindestens einen ersten Flugkreises (42a, 42b) einen Wert aus einem Bereich von 2 bis 14 mm, bevorzugt von 2 bis 8 mm, bevorzugt von 2, 4, 6 oder 8 mm und/oder der Durchmesser (32ad, 32bd, 32cd) des mindestens einen zweiten Flugkreises (32a, 32b, 32c) einen Wert aus einem Bereich von 1 bis 12 mm, bevorzugt von 1 bis 7 mm, besonders bevorzugt von 1, 3, 5 oder 7 mm aufweist.

7. Fräswerkzeug (1, 11, 111) nach einem der vorhergehenden Ansprüche,
**dadurch gekennzeichnet, dass**
der mindestens eine Freiwinkel (43a, 43b) einen Wert aus einem Bereich von 2-30°, bevorzugt von 5-15° aufweist.

8. Fräswerkzeug (1, 11, 111) nach einem der vorhergehenden Ansprüche,
**dadurch gekennzeichnet, dass**
das Fräswerkzeug (1, 11, 111) im Werkzeugschneidenbereich (2a) eine Stirnfläche (20) aufweist, die zumindest abschnittsweise gegenüber einer sich rechtwinklig zur Rotationsachse (6) erstreckenden Ebene (E1) geneigt ausgebildet ist.

9. Fräswerkzeug (1, 11, 111) nach Anspruch 8,
**dadurch gekennzeichnet, dass**
einzelne Anteile (20a, 20b) der geneigten Stirnfläche (20) eben oder kurvenförmig ausgebildet sind und sich in Richtung oder entgegen einer Längsrichtung (L) des Grundkörpers (2) oder in Richtung einer Radialrichtung (R) des Grundkörpers (2) erstrecken.

10. Fräswerkzeug (1, 11, 111) nach einem der vorhergehenden Ansprüche,
**dadurch gekennzeichnet, dass**
das Fräswerkzeug (1, 11, 111) links- oder rechtsschneidend und/oder links- oder rechtsspiralig ausgebildet ist.

11. Fräswerkzeug (1, 11, 111) nach einem der vorangegangenen Ansprüche,
**dadurch gekennzeichnet, dass**
das Fräswerkzeug (1, 11, 111) zumindest anteilig aus mindestens einem der Werkstoffe ausgewählt aus der Gruppe zumindest bestehend aus Schnellarbeitsstahl (HSS), Hartmetall, Cermet und/oder ähnlichem besteht.

## Claims

1. Milling tool (1, 11, 111) for machining workpieces, comprising a main body (2) designed as a rotational body, and comprising at least one smoothing blade (3a, 3b, 3c) and at least one roughing blade (4a, 4b), which are each designed so as to extend at least in part in the manner of a spiral around a rotational axis (6) of the main body (2) in a tool cutting region (2a) of the main body (2) and which each have a flute (31a, 31b, 31c; 41a, 41b) in front thereof in the circumferential direction (U) of the milling tool (1, 11, 111), wherein a diameter (42ad, 42bd) of a first circle of flight (42a, 42b) which is assigned to the roughing blade (4a, 4b) is larger than a diameter (32ad, 32bd, 32cd) of a second circle of flight (32a, 32b, 32c) which is assigned to the smoothing blade (3a, 3b, 3c), a clearance angle (43a, 43b) being arranged downstream of the roughing blade (4a, 4b) in the circumferential direction (U), **characterised in that** the smoothing blade (3a, 3b, 3c) is designed so as not to have a downstream clearance angle in the circumferential direction (U).

2. Milling tool (1, 11, 111) according to claim 1,
**characterised in that**
at least two smoothing blades (3a, 3b, 3c) are assigned to two second circles of flight (32a, 32b) having different diameters (32ad, 32bd, 32cd).

3. Milling tool (1, 11, 111) according to either of the preceding claims,
**characterised in that**
one roughing blade (4a) and two smoothing blades (3a, 3b) or one roughing blade (4a) and three smoothing blades (3a, 3b, 3c) or two roughing blades (4a, 4b) and two smoothing blades (3a, 3b) are arranged.

4. Milling tool (1, 11, 111) according to any of the preceding claims,
**characterised in that**
a radial distance (x) between the rotational axis (6) of the main body (2) and a lateral surface (44a, 44b) of the flute (41a, 41b) of the roughing blade (4a, 4b) has a value within a range of from 0.01 to 0.2 mm, preferably within a range of from 0.05 to 0.15 mm, preferably a value of 0.1 mm.

5. Milling tool (1, 11, 111) according to any of the preceding claims,
**characterised in that**
the flute (41a, 41b) of the roughing blade (4a, 4b) extends further than the flute (31a, 31b, 31c) of the smoothing blade (3a, 3b, 3c) in the circumferential direction (U) by a 2 to 8-fold integral or non-integral multiple, preferably by a 2 to 4-fold multiple.

6. Milling tool (1, 11, 111) according to any of the preceding claims,
**characterised in that**
the diameter (42ad, 42bd) of the at least one first circle of flight (42a, 42b) has a value within a range of from 2 to 14 mm, preferably from 2 to 8 mm, preferably a value of 2, 4, 6 or 8 mm, and/or the diameter (32ad, 32bd, 32cd) of the at least one second circle of flight (32a, 32b, 32c) has a value within a range of from 1 to 12 mm, preferably from 1 to 7 mm, particularly preferably a value of 1, 3, 5 or 7 mm.

7. Milling tool (1, 11, 111) according to any of the preceding claims,
**characterised in that**
the at least one clearance angle (43a, 43b) has a value within a range of 2-30°, preferably of 5-15°.

8. Milling tool (1, 11, 111) according to any of the preceding claims,
**characterised in that**
the milling tool (1, 11, 111) has an end face (20) in the tool cutting region (2a), which end face is designed so as to be inclined at least in portions with respect to a plane (E1) extending perpendicularly to the rotational axis (6).

9. Milling tool (1, 11, 111) according to claim 8,
**characterised in that**
individual portions (20a, 20b) of the inclined end face (20) are planar or curved and extend in or counter to a longitudinal direction (L) of the main body (2) or in a radial direction (R) of the main body (2).

10. Milling tool (1, 11, 111) according to any of the preceding claims,
**characterised in that**
the milling tool (1, 11, 111) is designed to cut towards the left or the right and/or to spiral towards the left or the right.

11. Milling tool (1, 11, 111) according to any of the preceding claims,
**characterised in that**
the milling tool (1, 11, 111) consists, at least in portions, of at least one of the materials selected from the group consisting of at least high-speed steel (HSS), cemented carbide, cermet and/or similar.

## Revendications

1. Outil de fraisage (1, 11, 111) pour l'usinage de pièces par enlèvement de copeaux, avec un corps de base (2) réalisé en tant que corps de rotation, comportant au moins une tranchant de finition (3a, 3b, 3c) et au moins une tranchant coupante de dégrossissage (4a, 4b), lesquelles sont chacune réalisées pour s'étendre au moins partiellement en forme de spirale autour d'un axe de rotation (6) du corps de base (2) dans une zone de coupe d'outil (2a) du corps de base (2) et en amont de chacune desquelles est disposée une rainure à copeaux (31a, 31b, 31c ; 41a, 41b) dans la direction périphérique (U) de l'outil de fraisage (1, 11, 111),
un diamètre (42ad, 42bd) d'une première trajectoire (42a, 42b) associée à l'tranchant coupante de dégrossissage (4a, 4b) étant supérieur à un diamètre (32ad, 32bd, 32cd) d'une deuxième trajectoire (32a, 32b, 32c) associée à l'tranchant de finition (3a, 3b, 3c),
un angle de dégagement (43a, 43b) étant disposé en aval de l'tranchant coupante de dégrossissage (4a, 4b) dans la direction périphérique (U)
**caractérisé par le fait que**
l'tranchant de finition (3a, 3b, 3c) est agencée sans angle de dégagement disposé en aval dans la direction périphérique (U).

2. Outil de fraisage (1, 11, 111) selon la revendication 1,
**caractérisé par le fait que**
au moins deux tranchants de finition (3a, 3b, 3c) sont associées à deux deuxièmes trajectoires (32a, 32b) avec des diamètres différents (32ad, 32bd, 32cd).

3. Outil de fraisage (1, 11, 111) selon l'une des revendications précédentes, **caractérisé par le fait que**
une tranchant coupante de dégrossissage (4a) et deux tranchants de finition (3a, 3b) ou une tranchant coupante de dégrossissage (4a) et trois tranchants de finition (3a, 3b, 3c) ou deux tranchants coupantes de dégrossissage (4a, 4b) et deux tranchants de finition (3a, 3b) sont disposées.

4. Outil de fraisage (1, 11, 111) selon l'une des revendications précédentes, **caractérisé par le fait que**
une distance radiale (x) entre l'axe de rotation (6) du corps de base (2) et d'une surface enveloppe (44a, 44b) de la rainure à copeaux (41a, 41b) de l'tranchant coupante de dégrossissage (4a, 4b) présente une valeur se situant dans une plage de 0,01 à 0,2 mm, de préférence dans une plage de 0,05 à 0,15 mm, de préférence de 0,1 mm.

5. Outil de fraisage (1, 11, 111) selon l'une des revendications précédentes, **caractérisé par le fait que**
la rainure à copeaux (41a, 41b) de l'tranchant coupante de dégrossissage (4a, 4b) s'étend dans la direction périphérique (U) d'un multiple entier ou non entier de 2 à 8 fois, de préférence d'un multiple de 2 à 4 fois plus loin que la rainure à copeaux (31a, 31b, 31c) de l'tranchant de finition (3a, 3b, 3c).

6. Outil de fraisage (1, 11, 111) selon l'une des revendications précédentes, **caractérisé par le fait que**
le diamètre (42ad, 42bd) de la au moins une première trajectoire (42a, 42b) présente une valeur se situant dans une plage de 2 à 14 mm, de préférence de 2 à 8 mm, de préférence de 2, 4, 6 ou 8 mm et/ou le diamètre (32ad, 32bd, 32cd) de la au moins une deuxième trajectoire (32a, 32b, 32c) présente une valeur se situant dans une plage de 1 à 12 mm, de préférence de 1 à 7 mm, de façon particulièrement préférée de 1, 3, 5 ou 7mm.

7. Outil de fraisage (1, 11, 111) selon l'une des revendications précédentes, **caractérisé par le fait que**
le au moins un angle de dégagement (43a, 43b) présente une valeur se situant dans une plage de 2-30°, de préférence de 5-15°.

8. Outil de fraisage (1, 11, 111) selon l'une des revendications précédentes, **caractérisé par le fait que**
l'outil de fraisage (1, 11, 111) présente dans la zone de coupe d'outil (2a) une surface frontale (20) qui est réalisée inclinée au moins par portions par rapport à un plan (E1) s'étendant perpendiculairement à l'axe de rotation (6).

9. Outil de fraisage (1, 11, 111) selon la revendication 8,
**caractérisé par le fait que**
certaines parties (20a, 20b) de la surface frontale inclinée (20) sont réalisées de façon plane ou incurvée et s'étendent dans le sens de ou en sens contraire à une direction longitudinale (L) du corps de base (2) ou dans le sens d'une direction radiale (R) du corps de base (2).

10. Outil de fraisage (1, 11, 111) selon l'une des revendications précédentes, **caractérisé par le fait que**
l'outil de fraisage (1, 11, 111) est réalisé pour une coupe à gauche ou à droite et/ou en spirale à gauche ou à droite.

11. Outil de fraisage (1, 11, 111) selon l'une des revendications précédentes, **caractérisé par le fait que**
l'outil de fraisage (1, 11, 111) se compose au moins dans une proportion d'au moins l'un des matériaux choisis dans le groupe au moins constitué par un acier à coupe rapide (HSS), un métal dur, un cermet et/ou similaires.
